# EUROPÄISCHE PATENTSCHRIFT

(11) **EP 0 398 200 B1**
(45) Veröffentlichungstag und Bekanntmachung des Hinweises auf die Patenterteilung: **04.08.1993**
(21) Anmeldenummer: 90108987.0
(22) Anmeldetag: 12.05.1990
(51) Int. Cl.: A23L 2/38

(54) **Verfahren zur Herstellung von alkoholfreien Getränken, enthaltend fermentativ gewonnene Milchsäure**
Process for the production of beverages free from alcohol containing lactic acid gained by fermentation
Procédé pour la production de boissons libre d'alcool contenant de l'acide lactique obtenu par fermentation

(30) Priorität: 17.05.1989 DE 3915967
(43) Veröffentlichungstag der Anmeldung: 22.11.1990
(73) Patentinhaber: Döhler GmbH, D-64295 Darmstadt (DE)
(72) Erfinder: Hauke, Franz, D-6101 Rossdorf (DE); Bäuml, Josef, D-6100 Darmstadt 12 (DE)
(74) Vertreter: Werner, Hans-Karsten, Dr.Dipl.-Chem.

(56) Entgegenhaltungen:
- EP-A- 0 054 122
- EP-A- 0 199 105
- AT-B- 168 599
- PATENT ABSTRACTS OF JAPAN, Band 6, Nr. 235 (C-136)(1113), 20. November 1982; & JP-A-57138370 (Kirinbeer K.K.) 26.08.1982

## Beschreibung

Gegenstand der vorliegenden Erfindung ist ein Verfahren zur Herstellung von alkoholfreien Getränken, enthaltend fermentativ gewonnene Milchsäure aus Brot, Malz und/oder Rohfrucht.

Alkoholfreie Getränke enthalten fermentativ gewonnene Milchsäure aus Brot, Malz und/oder Rohfrucht sind beispielsweise bekannt aus der GB-A- 2 057 846, der DE-A- 30 46 773 und der EP-A- 0 199 105. Diese Getränke enthalten je nach Herstellungsverfahren und verwendeten Mikroorganismen ein Gemisch aus L(+)-Milchsäure und D(-)-Milchsäure, gegebenenfalls weitere fermentativ entstandene organische Säuren, Kohlenhydrate, Mineralstoffe und Geschmacksstoffe. Außer spezifischen Geschmacks- und Aromastoffen des jeweils verwendeten Ausgangsmaterials enthalten sie insbesondere auch mehr oder weniger große Mengen unerwünschter Geschmacksstoffe, wie Acetoin und Diacetyl. Insbesondere diese Geschmacksstoffe und der ausgeprägt saure Geschmack durch die Milchsäure führen dazu, daß die bisher bekannten Getränke, enthaltend fermentativ gewonnene Milchsäure, von breiten Verbraucherkreisen nicht oder nur sehr zurückhaltend akzeptiert werden.

Das alkohlfreie Getränk gemäß AT-B-168 599 wird erhalten unter Einsatz eines bestimmten durch Reinzucht erhaltenen Mikroorganismus, nämlich Bakterium Delbrücki. Dazu werden zuckerhaltige Maischen niedriger Konzentration mit soviel bereits Milchsäure enthaltende Reinzucht beimpft, daß der Milchsäuregehalt der Maische bei Beginn der Gärung schon 0,2 % beträgt. Im Verlaufe der Gärung bei 50°C wird stufenweise Wasser zugesetzt, so daß zu keinem Zeitpunkt der Gärung der Milchsäuregehalt der Maische über 1 % steigt. Schließlich wird die Gärung unterbrochen, sobald ein Restzuckergehalt von 1 % und eine Milchsäurekonzentration von 1 % erreicht sind. Danach wird mit Kohle behandelt, einer Entkeimungsfiltration unterworfen, mit Trinkwasser verdünnt sowie Zuckersirup, Fruchtessenz, gegebenenfalls auch Farbstoffe sowie Schaummittel und künstliche Süßstoffe vor oder nach der Imprägnierung mit Kohlensäure zugesetzt. Es handelt sich um ein kompliziertes und aufwendiges Verfahren zur Herstellung eines Getränkes, das den heutigen qualitativen Standards nicht mehr gewachsen ist, zumal nicht einmal pasteurisiert wird und dadurch keine ausreichende Haltbarkeit gewährleistet ist.

EP-A-0 199 105 beschreibt ein alkoholfreies Biermischgetränk bzw. alkoholfreies bierähnliches Getränk mit oder ohne zusätzliche Aromatisierung. Es wird daher wie in der Brauerei mit Hopfen gekocht.

JP-A-57-138370 (Patent Abstracts of Japan, Band 6, Nr. 235) beschreibt einen Gemüsesaft, welcher mit einem spezifischen Milchbakterium versetzt, fermentiert und anschließend pasteurisiert wird. Hierbei werden die vergärbaren Kohlenhydrate des Gemüsesaftes abgebaut aber gleichzeitig auch die Geschmacksstoffe so verändert, daß sie vom Publikum nicht mehr akzeptiert werden. Insbesondere wegen der bekannt schlechten Geschmacksnoten von milchsauer vergorenen Gemüsesäften bestand ein schwerwiegendes Vorurteil gegen milchsaure Säfte, Fruchtsäfte und Gemüsesäfte.

Die Erfindung hat sich die Aufgabe gestellt, ein Verfahren zur Herstellung von alkoholfreien Getränken zu entwickeln, welches allen Anforderungen bezüglich Geschmack, Stabilität, Lagerfähigkeit und Akzeptanz vom Publikum genügt.

Es wurde jetzt gefunden, daß es möglich ist, wesentlich schmackhaftere und besser akzeptierte alkoholfreie Getränke, enthaltend fermentativ gewonnene Milchsäure aus Brot, Malz und/oder Rohfrucht, zu erhalten, wenn man sie mit 10 bis 50 Gew.-% Obstsaft, Fruchtsaft und/oder Gemüsesaft verschneidet und diese Gemische miteinander pasteurisiert, wobei der pH-Wert unter 4,5 abgesenkt wird und bei Temperaturen von 75 bis 90°C pasteurisiert wird.

Vorzugsweise werden die Getränke mit 20 bis 35 Gew.-% Obstsaft, Fruchtsaft und/oder Gemüsesaft verschnitten.

Die erfindungsgemäß hergestellten Getränke bestehend aus einem Gemisch der bisher bekannten alkoholfreien Getränke mit Obstsaft, Fruchtsaft und/oder Gemüsesaft überdecken nicht nur unangenehme Geschmacksnoten, sondern schmecken insgesamt wesentlich besser. Dies ist zum einen darauf zurückzuführen, daß die im allgemeinen recht kräftigen Geschmacksstoffe und Aromen von Obstsäften, Fruchtsäften und/ oder Gemüsesäften in der Lage sind, den eigentümlichen und oftmals sogar unangenehmen Geschmack der aus Brot, Malz und/oder Rohfrucht hergestellten Getränke zu überdecken. Zum anderen wird durch diese Maßnahme die Milchsäure verdünnt und in einer Reihe von Fällen durch die Bestandteile der Obstsäfte, Fruchtsäfte und/oder Gemüsesäfte abgepuffert, so daß diese erfindungsgemäß hergestellten Getränke einen höheren pH-Wert aufweisen. Offensichtlich führt die Veränderung des pH-Wertes der Obstsäfte, Fruchtsäfte und/oder Gemüsesäfte durch die Milchsäure zu einer angenehmen Geschmacksveränderung und Geschmacksverstärkung der Geschmacksstoffe und Aromen dieser Obstsäfte, Fruchtsäfte und/oder Gemüsesäfte.

Ein weiterer nicht vorhersehbarer Vorteil der erfindungs- gemäß hergestellten alkoholfreien Getränke besteht darin, daß sie als fertiges Gemisch pasteurisiert werden, und zwar bei relativ niedrigen Temperaturen, oftmals sogar bei niedrigeren Temperaturen als die unvermischten Obstsäfte, Fruchtsäfte und/oder Gemüsesäfte. Dieser Effekt ist wahrscheinlich darauf zurückzuführen, daß die Veränderung des pH-Wertes der Obstsaft, Fruchtsaft- und/oder Gemüsesaft-Komponente bereits eine gewisse Stabilisierung bewirkt, so daß insgesamt bei niedrigerer Temperatur pasteurisiert werden kann. Das Pasteurisieren bei niedrigeren Temperaturen schont aber die natürlichen Geschmacks- und Aromastoffe der Obstsäfte, Fruchtsäfte und/oder Gemüsesäfte, so daß der angenehme Geschmack der nicht pasteurisierten Obstsäfte, Fruchtsäfte und/oder Gemüsesäfte besser erhalten bleibt. Dieser Effekt ist zu beobachten, wenn der pH-Wert unter 4,5 abgesenkt wird, vorzugsweise sogar auf unter 4,0. Es wird daher anstelle einer Pasteurisierung bei 130°C bei Temperaturen von 75 bis 90°C pasteurisiert.

Diese schonenden Bedingungen des Pasteurisierens führen dazu, daß der Gehalt an natürlichen Vitaminen der Obstsäfte, Fruchtsäfte und/oder Gemüsesäfte in höherem Maße erhalten bleibt. Gleichzeitig wird jedoch der Kaloriengehalt der Getränke gegenüber den ursprünglich eingesetzten Obstsäften, Fruchtsäften und/oder Gemüsesäften gesenkt.

Die erfindungsgemäß hergestellten alkoholfreien Getränke haben erstaunlicherweise deutlich bessere und angenehmere Geschmacksnoten als Obstsäfte, Fruchtsäfte und/oder Gemüsesäfte, die einer direkten milchsauren Gärung unterworfen worden sind. Offensichtlich werden bei dieser milchsauren Gärung von Obstsäften, Fruchtsäften und/oder Gemüsesäften nicht nur wertvolle Bestandteile, sondern auch angenehme Geschmacksnoten der Ausgangsmaterialien verändert. Darüber hinaus entstehen bei der milchsauren Vergärung von Obstsäften, Fruchtsäften und/oder Gemüsesäften unerwünschte Geschmacksnoten, die durch die restlichen Geschmacks- und Aromastoffe nicht mehr ausreichend überdeckt werden können. Es war somit nicht vorherzusehen, daß durch Verschneiden von alkoholfreien Getränken, enthaltend fermentativ gewonnene Milchsäure aus Brot, Malz und/oder Rohfrucht, mit Obstsaft, Fruchtsaft und/oder Gemüsesaft und anschließendes gemeinsames Pasteurisieren bei einem pH-Wert unter 4,5 und bei Temperaturen von 75 bis 90°C Produkte entstehen, die den bisher bekannten Produkten deutlich überlegen sind.

Die erfindungsgemäß hergestellten Getränke weisen ein ausgewogenes Verhältnis zwischen Kaloriengehalt, Mineralstoffgehalt, Vitaminen und Geschmacksstoffen auf, so daß sie unbedenklich auch in größeren Mengen getrunken werden können und von breiteren Verbraucherschichten akzeptiert werden.

Gegenstand der vorliegenden Erfindung ist somit das Verfahren gemäß Patentanspruch.

Je nach der gewünschten Geschmacksnote können Brot, Malz und/oder Rohfrucht aus üblichen Cerealien eingesetzt werden, insbesondere Gerste, Weizen, Roggen, aber auch Dinkel, Mais und Reis sowie Gemische derselben.

Als milchsäureerzeugende Mikroorganismen können alle üblichen auf Cerealien wachsende Milchsäurebakterien verwendet werden, die schon jetzt für diese Zwecke eingesetzt werden. Außer den häufig eingesetzten Malzenzymen zum Aufschluß der Stärke können auch dextrinabbauende Mikroorganismen, wie Pediococcus dextrinicus, verwendet werden, insbesondere solche Stämme, wie die in der EP-A- 0 199 105 beschriebenen Stämme DSM 3283 und DSM 3284. Weitere typische milchesäureerzeugende Mikroorganismen sind Lactobacillus delbrueckii und Lactobacillus casei. Gewünschtenfalls kann auch das Animpfen mit bestimmten Mikroorganismen ersetzt werden durch die spontan einsetzende milchsaure Fermentation gemäß DE-A- 30 46 773.

Als Obstsäfte, Fruchtsäfte und/oder Gemüsesäfte kommen prinzipiell alle Obst-, Frucht- und Gemüsesäfte in Frage, die aus Äpfeln, Kirschen, Johannisbeeren, Erdbeeren, Himbeeren, Trauben, Holunderbeeren, Heidelbeeren, Zitrusfrüchten, wie Orangen, Zitronen, Mandarinen und Pampelmusen, exotischen Früchten, wie Maracuja, Kiwi etc. sowie Gemischen derselben hergestellt werden. Als Gemüsesäfte kommen vor allem die üblichen Säfte aus Karotten, Roten Beeten und Tomaten in Frage. Weiterhin kommen Mischsäfte in Frage, die unter Umständen eine besonders angenehme Abstimmung des Geschmacks ermöglichen.

Sowohl für die Cerealien, als auch für das eingesetzte Obst, die Früchte und das Gemüse werden vorzugsweise solche aus natürlich biologischem Anbau eingesetzt, da dies unerwünschte Bestandteile aus Agrochemikalien ausschließt, zumal diese auch die Milchsäuregärung negativ beeinflussen können. Außer den jeweils klaren Getränken können auch naturtrübe Getränke hergestellt werden, die meist einen erhöhten Gehalt an für die Verdauung wertvollen Bestandteilen aufweisen.

Die erfindungsgemäß hergestellten alkoholfreien Getränke können als breite Palette verschiedenster Geschmacksrichtungen zusammengestellt werden, so daß für nahezu jede Geschmacksrichtung geeignete Rezepturen zusammengestellt werden können. Oftmals genügt es aber schon zwei oder drei Gemische herzustellen und als Palette anzubieten. So wird beispielsweise ein auf Basis von milchsauer vergorenem Brot gewonnenes Getränk deutlich verbessert durch Zugabe von 25 bis 30 Gew.-% naturtrüben Apfelsaft oder 20 bis 30 Gew.-% Zitrussaft oder 20 bis 35 Gew.-% Karottensaft. In allen Fällen wird darauf geachtet, daß der pH-Wert des Gemisches-unter 4,5 liegt, vorzugsweise unter 4,0, so daß eine Pasteurisierung bei 75 bis 90°C ausreicht, um lagerfähige und stabile Produkte herzustellen, die eine angenehme und natürliche Geschmacksnote aufweisen. Gewünschtenfalls können die erfindungsgemäßen Getränke auch mit Kohlensäure versetzt werden. In diesen Fällen werden sie meist erst mit Kohlensäure versetzt, in Flaschen abgefüllt und dann in der Flasche pasteurisiert. In dem nachfolgenden Beispiel sind einige Richtrezepturen zusammengestellt, bei denen die Fruchtsäfte in Form von Konzentraten zugesetzt würden. Selbstverständlich können aber auch die nicht konzentrierten naturbelassenen Säfte unmittelbar nach der Gewinnung mit den milchsauren Getränk verschnitten und pasteurisiert werden. Die Angaben in Gew.-% beziehen sich somit auf den Saftgehalt der Komponenten.

### Beispiel

1 l durch milchsaure Vergärung gewonnenes Getränk gemäß DE-A- 2046773 oder EP-A- 0199105 mit einem Milchsäuregehalt von ca. 10 g/l und einem pH-Wert von ca. 3,3 bis 3,5 wird versetzt mit handelsüblichem Grundstoffkonzentrat, nämlich
- 15 g: Orange/Maracuja (ca 9 : 1) oder
- 35 g: Multiexotic (Art. 5695 der Anmelderin) oder
- 125 g: Vitasin (Obstessig, Apfelsaft, Apfelsaftkonzentrat und Honig ca. 80 % Trockensubstanz, ein Produkt der Anmelderin) oder
- 85 g: Apfel/Zitrone (80 : 20).

Die Mischungen werden bei 75 bis 90°C pasteurisiert und heiß in Flaschen abgefüllt. Sofern sie mit Kohlensäure versetzt wurden, werden sie erst in Flaschen gefüllt und dann in der Flasche pasteurisiert. Es sind wohlschmeckende, gut haltbare und erfrischende Getränke entstanden mit einem ausgewogenen Verhältnis von Kaloriengehalt, Mineralstoffgehalt, Vitaminen und Geschmacksstoffen.

## Patentansprüche

1. Verfahren zur Herstellung von alkoholfreien Getränken, enthaltend fermentativ gewonnene Milchsäure aus Brot, Malz und/oder Rohfrucht, dadurch gekennzeichnet, daß sie gegebenenfalls nach Abtrennung der nach der Fermentation vorhandenen Feststoffe mit 10 bis 50 Gew.-%, vorzugsweise 20 bis 35 Gew.-%, Obstsaft, Fruchtsaft und/oder Gemüsesaft verschnitten und danach pasteurisiert werden, wobei der pH-Wert unter 4,5 abgesenkt wird und bei Temperaturen von 75 bis 90°C pasteurisiert wird.

## Claims

1. A process for producing alcohol free beverages, containing lactic acid obtained from bred, malt and/or raw fruit by fermentation, characterized in that after optional separation of the resulting solid after fermentation, they are blended with 10 to 50% by weight, preferably 20 to 35% by weight, of fruit juice and/or vegetable juice and then are pasteurized, reducing the pH value below 4,5 and pasteurizing at temperatures from 75 to 90 °C.

## Revendications

1. Procédé d'obtention de boissons non alcoolisées comprenant de l'acide lactique provenant de pain, de malt, et/ou de fruits crus, obtenu par fermentation, caractérisé en ce qu'elles sont diluées avec 10 à 50 % en poids, de préférence 20 à 35 % en poids de jus de fruits et/ou de légumes, éventuellement après séparation des matières solides présentes après la fermentation, puis pasteurisées, la valeur du pH étant abaissée au-dessous de 4,5, et la température de pasteurisation étant de 75 à 90°C.
